# EUROPÄISCHE PATENTSCHRIFT

(11) **EP 1 334 010 B1**
(45) Veröffentlichungstag und Bekanntmachung des Hinweises auf die Patenterteilung: **13.10.2004**
(21) Anmeldenummer: 01953848.7
(22) Anmeldetag: 04.07.2001
(51) Int. Cl.: B60R 21/01

(54) **RÜCKHALTESYSTEM MIT EINER RÜCKHALTEEINRICHTUNG ZUM SCHUTZ WENIGSTENS EINES PASSAGIERS UND VERFAHREN ZUR STEUERUNG EINES RÜCKHALTESYSTEMS**
RESTRAINING SYSTEM COMPRISING A RESTRAINING DEVICE FOR PROTECTING AT LEAST ONE PASSENGER AND A METHOD FOR CONTROLLING A RESTRAINING SYSTEM
SYSTEME DE RETENUE POURVU D'UN DISPOSITIF DE RETENUE POUR LA PROTECTION D'AU MOINS UN PASSAGER, AINSI QUE PROCEDE POUR LA COMMANDE D'UN SYSTEME DE RETENUE

(30) Priorität: 29.08.2000 DE 10042376
(43) Veröffentlichungstag der Anmeldung: 13.08.2003
(73) Patentinhaber: ROBERT BOSCH GMBH, 70442 Stuttgart (DE)
(72) Erfinder: ROELLEKE, Michael, 71229 Leonberg-Hoefingen (DE); JAUCH, Thomas, 72147 Nehren (DE); KOEHLER, Armin, 74343 Sachsenheim (DE)
(86) Internationale Anmeldenummer: PCT/DE2001/002467
(87) Internationale Veröffentlichungsnummer: WO 2002/018179

(56) Entgegenhaltungen:
- EP-A- 1 101 657
- DE-A- 19 713 087
- US-A- 5 036 467
- US-A- 5 667 244

## Beschreibung

### Stand der Technik

Die Erfindung geht aus von einem Rückhaltesystem mit einer Rückhalteeinrichtung zum Schutz wenigstens eines Passagiers und Verfahren zur Steuerung eines Rückhaltesystems nach der Gattung der unabhängigen Patentansprüche.

Aus der Offenlegungsschrift DE 197 13 087 A1 ist ein Fahrzeugpassagierrückhaltesystem bekannt, das einen Beschleunigungssensor zur Erfassung der Beschleunigung des Kraftfahrzeugs, einen Analog-/Digital-Umsetzer zur Digitalisierung der Ausgangssignale des Beschleunigungssensors, einen Wavelet-Transformator zur Transformation der digitalen Signale, um Wavelet-Koeffizienten zu erzeugen, und eine Einrichtung zur Berechnung der Geschwindigkeit aufweist, wobei ein Aktuator für das Rückhaltesystem betätigt wird, sobald die Geschwindigkeitsänderung und der Wavelet-Koeffizient jeweils vorgegebene Schwellwerte überschreiten.

Der Wavelet-Koeffizient wird mittels einer Wavelet-Funktion berechnet, die aus einer Mutter-Wavelet-Funktion mit einem Skalierungsfaktor und einem Verschiebeparameter für die Zeitverschiebung erzeugt wurde.

Vorteile der Erfindung

Das erfindungsgemäße Rückhaltesystem mit einer Rückhalteeinrichtung zum Schutz wenigstens eines Passagiers und das erfindungsgemäße Verfahren zur Steuerung eines Rückhaltesystems mit den Merkmalen der unabhängigen Patentansprüche haben demgegenüber den Vorteil, dass durch eine Unterscheidung von Crashtypen und der Auswertung der Bremsbeschleunigungsenergie ein optimaler Auslösezeitpunkt für das Rückhaltesystem bestimmt wird. Die Auslösung des Rückhaltesystems ist demnach situationsgerechter.

Durch die in den abhängigen Ansprüchen aufgeführten Maßnahmen und Weiterbildungen sind vorteilhafte Verbesserungen des in den unabhängigen Ansprüchen angegebenen Rückhaltesystems bzw. Verfahrens zur Steuerung eines Rückhaltesystems möglich.

Besonders vorteilhaft ist, dass die Crashtypen durch einen Vergleich von Sätzen von antrainierten und abgespeicherten Merkmalen mit extrahierten Merkmalen ermittelt werden. Damit ist eine eindeutige Identifikation des jeweiligen Crashtyps möglich, der dazu führt, ob das Rückhaltesystem ausgelöst werden muß oder nicht. Nicht jeder Crash bedingt die Auslösung des Rückhaltesystems. Dazu gehören beispielsweise Frontalcrashs mit einer Geschwindigkeit von max. 15 km/h oder ein Heckcrash. Aber auch Fehlsignale werden dadurch identifiziert und führen daher vorteilhafterweise nicht zu einer Auslösung der Rückhalteeinrichtung.

Darüber hinaus ist es von Vorteil, dass zwischen den antrainierten Merkmalen und den extrahierten Merkmalen Differenzen gebildet werden und diese Differenzen mit einem vorgegebenen Schwellwert verglichen werden, so dass eine Identifikation eines Crashtyps nur bei Unterschreiten des Schwellwerts stattfindet. Nämlich nur dann ist die Differenz derart gering, so dass von einer Identifikation dieses Merkmals gesprochen werden kann.

Weiterhin ist es von Vorteil, dass das Maß für die Bremsbeschleunigungsenergie ebenfalls mit einem zweiten Schwellwert verglichen wird, so dass nur, wenn der Crashtyp eine Auslösung verlangt und wenn das Maß über dem Schwellwert liegt, so dass eine Auslösung daher notwendig wird, die Auslösung tatsächlich stattfindet. Beide Bedingungen müssen demnach erfüllt sein, um eine Auslösung hervorzurufen. Dadurch werden vorteilhafterweise Fehlauslösungen unwahrscheinlicher und damit die Auslösung einer Rückhalteeinrichtung sicherer.

### Zeichnung

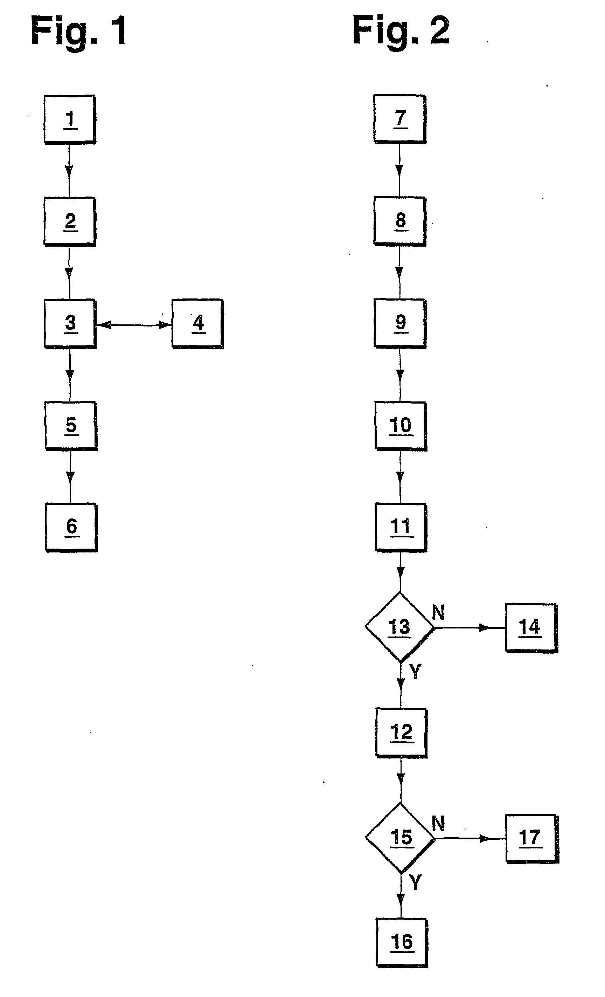

Ausführungsbeispiele der Erfindung sind in der Zeichnung dargestellt und werden in der nachfolgenden Beschreibung näher erläutert. Es zeigt Figur 1 das erfindungsgemäße Rückhaltesystem als Blockdiagramm und Figur 2 das erfindungsgemäße Verfahren zur Steuerung eines Rückhaltesystems als Flußdiagramm.

### Beschreibung

Durch den vermehrten Einsatz von Rückhaltesystemen wie Airbags und Gurtstraffern in Kraftfahrzeugen ist es entscheidend, den Zeitpunkt zu bestimmten, bei dem solche Rückhaltesysteme ausgelöst werden sollen. Dabei sind die Art des Zusammenpralls zwischen Fahrzeugen oder Hindernissen und die Geschwindigkeit, mit der das passiert, für den Auslösezeitpunkt entscheidend.

Wavelets haben sich auf dem Gebiet der Signalanalyse als ein populäres und erfolgreiches Verfahren etabliert, wobei die Wavelet-Transformation in unterschiedlichen Gebieten Anwendung findet. Die Wavelet-Transformation ist ein Verfahren zum Teilen eines Eingangssignals in sogenannte Wavelets als dessen Komponenten und zum Wieder-Zusammensetzen des ursprünglichen Eingangssignals als eine lineare Überlagerung der Wavelets. Die Wavelet-Transformation wird wirkungsvoll zur Analyse eines instabilen oder unstetigen Zustands, beispielsweise bei einem Zustandsübergang, verwendet. Als Basis dient eine Mutter-Wavelet-Funktion, über die eine Maßstab- oder Skalentransformation und eine Fourier-Transformation ausgeführt wird. Die Mutter-Wavelet-Funktion ist eine quadratisch integrierbare Funktion, die zeitlich lokalisiert bzw. eine Funktion im Zeitbereich ist, obwohl die Basis diejenige sein muß, die begrenzt ist und diejenige, die in einem Entfernungsbereich schnell gedämpft oder abgeschwächt wird. Bei der Wavelet-Transformation ist die Zerlegerate für die Analyse frei wählbar. Im Vergleich zur Fourier-Transformation eignen sich Basisfunktionen wie die Wavelets, die sowohl im Zeit- als auch im Frequenzbereich etliche Intervalle belegen, besser für Unstetigkeiten. Aufgrund der Lokalität der Funktionen können auch besonders steile Flanken von Funktionen optimal dargestellt werden.

Erfindungsgemäß wird daher ein Rückhaltesystem mit einer Rückhalteeinrichtung und ein Verfahren zur Steuerung eines Rückhaltesystems vorgestellt, das mit einer Wavelet-Transformation arbeitet und anhand der Wavelet-transformierten Signale Merkmale bestimmt, diese Merkmale mit abgespeicherten und antrainierten Merkmalen vergleicht, um einen Crashtyp zu bestimmen und anhand des transformierten Wavelet-Signals die Beschleunigungsenergie bestimmt oder zumindest ein Maß dafür und anhand des Crashtyps und des Maßes für die Beschleunigungsenergie entscheidet, ob die Rückhalteeinrichtung des Rückhaltesystems ausgelöst werden soll oder nicht.

In Figur 1 ist als Blockdiagramm das erfindungsgemäße Rückhaltesystem dargestellt. Ein Beschleunigungssensor 1 ist an einen Eingang eines Analog-/Digital-Wandlers 2 angeschlossen. Der Datenausgang des Analog-/Digital-Wandlers 2 führt an einen Dateneingang eines Prozessors 3. Der Prozessor 3 ist über einen Datenein-/-ausgang mit einem Speicher 4 verbunden. Ein Datenausgang des Prozessors 3 führt zu einer Aktorik 5, deren Ausgang wiederum an die Rückhalteeinrichtung 6 angeschlossen ist.

Der Beschleunigungssensor 1 erfasst die Beschleunigung des Fahrzeugs in dem sich das erfindungsgemäße Rückhaltesystem befindet. Der Beschleunigungssensor 1 ist an einem bestimmten Platz im Fahrzeug, beispielsweise einem Mittenabschnitt, angeordnet, so dass der Beschleunigungssensor 1 ein Signal in Abhängigkeit von einer Beschleunigung oder einer Verzögerung als negativer Beschleunigung ausgibt. Es können verschiedene Sensortypen für den Beschleunigungssensor 1 verwendet werden, wie beispielsweise ein Sensor mechanischer Bauart, der einen Massenrotor verwendet, ein Sensor, der aus einem Halbleiter gefertigt wurde, wobei Halbleitersensoren vorzugsweise Membranen aufweisen und es kann ein Sensor verwendet werden, der dann, wenn eine Fahrzeugkollision aufgetreten ist, ein Signal nur in dem Fall ausgibt, in dem die Verzögerung des Fahrzeugs den Wert erreicht, der einer Aufprallkraft größer als ein vorbestimmtes Maß entspricht. Eine Vorwärtsbeschleunigung und eine Verzögerung als die Ausgangssignale des Beschleunigungssensors 1 können anhand eines Vorzeichens leicht unterschieden werden. Das Ausgangssignal des Beschleunigungssensors 1 führt dann auf den Eingang des Analog-/Digital-Umsetzers 2, der diese Ausgangssignale digitalisiert und dann dem Prozessor 3 zuführt. Der Prozessor 3 steuert die Aktorik 5, die eine Zündsteuerschaltung aufweist, um gegebenenfalls das Rückhaltesystem 6 auszulösen. Der Prozessor 3 ist ein herkömmlicher Prozessor, beispielsweise ein Mikrocontroller, der den Speicher 4 dazu nutzt, einerseits um Zwischenergebnisse abzulegen und andererseits, um gespeicherte Daten zu einer Crashtyp-Identifikation zu verwenden. Der Prozessor 3 führt weiterhin die Wavelet-Transformation der durch den Beschleunigungssensor 1 erfassten Daten durch. Die Wavelet-Transformation hat den Vorteil, dass ein Signal ohne Verlust der Zeitinformation mit konstanter relativer Bandbreite in dessen Frequenzkomponenten zerlegbar ist. Die Wavelet-Transformation eignet sich insbesondere für instationäre Signale und verfügt über sehr schnelle Algorithmen, welche sich über Filterbankstrukturen realisieren lassen. Dafür kann dann auch eine nur für diesen Zweck vorgesehene Hardware verwendet werden.

Mathematisch beschreibt man die Wavelet-Transformation durch eine Integtral-Transformation des Signals in orthogonale Unterräume. Die dabei berechneten Wavelet-Koeffizienten werden im Wesentlichen durch zwei Parameter bestimmt. Das ist zum einen der Skalierungsfaktor, zum anderen die Zeitverschiebung. Weiterhin wird bei der Wavelet-Transformation eine Funktion verwendet, nach der das Signal transformiert wird, diese Funktion ist insbesondere von diesen beiden Parametern, dem Skalierungsfaktor und der Zeitverschiebung, abhängig.

Wendet man die Wavelet-Transformation auf Crashbeschleunigungssignale an, lassen sich damit Informationen über maximale Signalenergien sowie über mittlere Signalenergie in verschiedenen Frequenzbändern des Signals extrahieren. Dies sind charakteristische Informationen für den einzelnen Crashtypen und in Kombination lassen sie sich zur Klassifizierung oder Erkennung dieser Crashtypen verwenden. Es liegen damit dann zwei Merkmale pro Frequenzband vor. Mittels dieser Merkmale lassen sich dann die einzelnen Crashtypen identifizieren. Hier werden sieben verschiedene Crashtypen eingeteilt, wobei zu jedem Crashtyp ein Satz von abgespeicherten und angelernten Merkmalen vorliegt. Die vom Beschleunigungssensor 1 ermittelten Merkmale werden mit diesen abgespeicherten Merkmalen verglichen, wobei dabei Differenzen zwischen den ermittelten und den abgespeicherten Merkmalen gebildet werden, es werden also Energiedifferenzen gebildet. Diese Differenzen müssen unter einem vorgegebenen Schwellwert liegen, damit ein Crashtyp identifiziert werden kann. Es müssen also alle Merkmale eines Satzes für einen Crash eine Differenz unter diesem ersten Schwellwert aufweisen. Nur dann ist der jeweilige Crashtyp identifiziert. Die Crashtypen sind so beschaffen, dass immer eine Identifikation ermöglicht wird, wobei auch wenigstens ein Crashtyp einen Nichtauslöser darstellt, das sind solche Crashtypen, die kein Auslösen der Rückhalteeinrichtung 6 nach sich ziehen.

In der folgenden Tabelle sind die sieben verschiedenen Crashtypen dargestellt. Alternativ ist es möglich, dass mehr oder weniger Crashtypen vorgesehen sein können.

| Nr. | Bezeichnung | Beschreibung |
|---|---|---|
| 1 | SEVERE | Sehr schnelle Crashes mit harter Barriere (z.B. 50 km/h Frontal) |
| 2 | LIGHT | Harte Crashes mittlerer Geschwindigkeit (z.B. 20-30 km/h Frontal) |
| 3 | OHARD | Harte, rel. schnelle Offset und andere Nicht-Frontalcrashes (z.B. 55 km/h Offset 50% Links, 48 km/h Pfahlaufprall 100%, 65 km/h ODB 40% Rechts) |
| 4 | OSOFT | Weiche Offset und andere Nicht-Frontalcrashes schneller bis mittlerer Geschwindigkeit (z.B. 60 km/h ODB ADAC 40% Links, 25 km/h 30° Schräg Rechts) |
| 5 | NON | Nichtauslöse-Crashes (z.B. 15 km/h Frontal und Typschaden) |
| 6 | MIS | Misuse-Tests (Nichtauslöser) |
| 7 | HECK | Heck-Crashes (Nichtauslöser) |

Der Prozessor 3 führt neben der Klassifizierung des Crashs anhand der ermittelten Merkmale auch noch die Berechnung der Bremsbeschleunigungsenergie durch und vergleicht diese Bremsbeschleunigungsenergie mit einem zweiten vorgegebenen Schwellwert, wobei die Bremsbeschleunigungsenergie über diesem Schwellwert liegen muß, damit ein Auslösesignal für die Rückhalteeinrichtung 6 gesendet werden kann. Der Schwellwert ist für den ermittelten Crashtyp spezifisch, damit liegen so viele Schwellwerte vor, wie es Crashtypen gibt, die das Auslösen des Rückhaltesystems mit sich bringen.

Diese Bedingung für die Bremsbeschleunigungsenergie wird damit nur überprüft, wenn ein jeweilig ermittelter Crashtyp entweder die Folge nach sich zieht, dass ein Auslösesignal für die Rückhalteeinrichtung 6 gesendet wird. Bei den Crashtypen 1 bis 4 wird ein Auslösesignal gesendet, während bei den Crashtypen 5 bis 7 dieses unterbleibt. Wird also die Bremsbeschleunigungsenergie über dem Schwellwert sein und einer der Crashtypen 5 bis 7 identifiziert wird, dann kommt es zu keinem Auslösesignal für die Rückhalteeinrichtung 6, da eine der Bedingungen nicht erfüllt wird. Es müssen vielmehr beide Bedingungen erfüllt sein, um ein Auslösesignal für die Rückhalteeinrichtung 6 zu geben. Wird ein solches Auslösesignal von dem Prozessor 3 als zu sendend erkannt, dann sendet der Prozessor 3 dies der Aktorik 5, die dann über ein Steuersignal die Rückhalteeinrichtung 6 auslöst.

In Figur 2 ist das erfindungsgemäße Verfahren zur Steuerung eines Rückhaltesystems als Flußdiagramm dargestellt. In Verfahrensschritt 7 wird die Beschleunigung des Fahrzeugs durch den Beschleunigungssensor 1 erfasst. In Verfahrensschritt 8 erfolgt die Analog-/Digital-Wandlung der vom Beschleunigungssensor 1 ausgegebenen Signale. In Verfahrensschritt 9 werden die digitalisierten Signale der Wavelet-Transformation unterzogen, um sie in den Frequenzraum zu transformieren. In Verfahrensschritt 10 werden die Signale in Frequenzbänder aufgeteilt und pro Frequenzband werden die mittlere und die maximale Signalenergie berechnet. In Verfahrensschritt 11 erfolgt anhand der mittleren und der maximalen Signalenergie pro Frequenzband als den extrahierten Merkmalen und anhand der abgespeicherten Merkmalen, die als Sätze jeweils für die vorbestimmten Crashtypen abgespeichert sind, eine Identifikation des jeweiligen Crashtyps. Diese Identifikation erfolgt, wie oben dargestellt, durch Differenzenbildung zwischen den ermittelten Merkmalen und den abgespeicherten Merkmalen. In Verfahrensschritt 13 wird überprüft, ob der identifizierte Crashtyp als Konsequenz ein Auslösen der Rückhalteeinrichtung 6 nach sich zieht. Ist das nicht der Fall, wird in Verfahrensschritt 14 das erfindungsgemäße Verfahren beendet.

Nach Verfahrensschritt 13 wird in Verfahrensschritt 12 aus eben den Wavelet-transformierten Signalen ein Maß für die Bremsbeschleunigungsenergie berechnet, wobei insbesondere der tieffrequente Anteil der Signalenergie betrachtet wird. In Verfahrensschritt 15 wird dieses Maß für die Bremsbeschleunigungsenergie mit einem vorgegebenen Schwellwert, der für den in Verfahrenschritt 11 ermittelten Crashtyp charakteristisch ist, verglichen. Liegt die Bremsbeschleunigungsenergie über dem jeweiligen Schwellwert und ist ein Crashtyp ermittelt worden, der das Auslösen der Rückhalteeinrichtung 6 mit sich bringt, wird in Verfahrensschritt 16 die Rückhalteeinrichtung 6 von der Aktorik 5 ausgelöst, da zu Verfahrensschritt 16 nur die Crashtypen gelangen, die das Auslösen der Rückhalteeinrichtung 6 nach sich ziehen. Hier findet also die UND-Verknüpfung statt. Wurde in Verfahrensschritt 15 festgestellt, dass die Bremsbeschleunigungsenergie unter dem vorgegebenen Schwellwert liegt, dann wird in Verfahrensschritt 17 die Rückhalteeinrichtung 6 nicht ausgelöst.

## Patentansprüche

1. Rückhaltesystem mit einer Rückhalteeinrichtung zum Schutz wenigstens eines Passagiers, wobei das Rückhaltesystem einen Beschleunigungssensor (1) zum Erfassen einer Beschleunigung des Fahrzeugs, einen Analog-/Digital-Wandler (2) zur Wandlung eines Ausgangssignals des Beschleunigungssensors (1) in ein der Beschleunigung entsprechendes digitales Signal, einen Prozessor (3) zur Durchführung einer Wavelet-Transformation des digitalen Signals zu einem Frequenzsignal, einen Speicher (4) und eine Aktorik (5) zur Steuerung der Rückhalteeinrichtung (6) aufweist, **dadurch gekennzeichnet, dass** der Prozessor (3) das Frequenzsignal in einzelne Frequenzbereiche aufteilt, dass der Prozessor (3) für jeden Frequenzbereich die jeweilige maximale und die jeweilige mittlere Signalenergie ermittelt, um Merkmale zu extrahieren, dass der Prozessor (3) anhand der Merkmale einen Crashtyp bestimmt, dass der Prozessor (3) aus dem Frequenzsignal ein Maß für die Bremsbeschleunigungsenergie ermittelt, dass der Prozessor (3) in Abhängigkeit von dem Maß und dem Crashtyp ein Steuersignal an die Aktorik (5) übermittelt.

2. Rückhaltesystem nach Anspruch 1, **dadurch gekennzeichnet, dass** der Prozessor (3) die extrahierten Merkmale mit in dem Speicher (4) abgespeicherten und antrainierten Merkmalen vergleicht, um den Crashtyp zu bestimmen, wobei die antrainierten Merkmale in Sätzen aufgeteilt sind und den Sätzen jeweils Crashtypen zugeordnet werden.

3. Rückhaltesystem nach Anspruch 2, **dadurch gekennzeichnet, dass** der Prozessor (3) Differenzen von den extrahierten Merkmalen und den Sätzen der abgespeicherten Merkmale bildet und dass, wenn die Differenzen von einem Satz unter einem ersten Schwellwert liegen, der Prozessor (3) die extrahierten Merkmale dem Crashtyp dieses Satzes zuordnet.

4. Rückhaltesystem nach Anspruch 3, **dadurch gekennzeichnet, dass** der Prozessor (3) das Maß mit einem zweiten zeitlich veränderbaren Schwellwert vergleicht und dass, wenn das Maß über dem zweiten Schwellwert liegt der Prozessor (3) ein Steuersignal in Abhängigkeit von dem ermittelten Crashtyp an die Aktorik (5) übermittelt.

5. Verfahren zur Steuerung eines Rückhaltesystems (6), wobei die Beschleunigung eines Fahrzeugs als ein Beschleunigungssignal erfasst wird, wobei das Beschleunigungssignal zu einem digitalen Signal digitalisiert wird, wobei das digitale Signal zu einem Frequenzsignal mit einer Wavelet-Transformation transformiert wird, wobei mit einer Aktorik (5) das Rückhaltesystem (6) gesteuert wird, **dadurch gekennzeichnet, dass** das Frequenzsignal in Frequenzbereiche aufgeteilt wird, dass für jeden Frequenzbereich die jeweilige maximale und jeweilige mittlere Signalenergie ermittelt werden, um Merkmale zu extrahieren, dass anhand der Merkmale der Crashtyp bestimmt wird, dass aus dem Frequenzsignal ein Maß für die Bremsbeschleunigungsenergie bestimmt wird und dass in Abhängigkeit von dem Maß und dem Crashtyp ein Steuersignal an die Aktorik (5) übermittelt wird.

6. Verfahren nach Anspruch 5, **dadurch gekennzeichnet, dass** der Prozessor (3) die extrahierten Merkmale mit den abgespeicherten Merkmalen vergleicht, um den Crashtyp zu bestimmen, wobei die abgespeicherten Merkmale in Sätzen aufgeteilt sind und den Sätzen jeweils Crashtypen zugeordnet werden.

7. Verfahren nach Anspruch 6, **dadurch gekennzeichnet, dass** der Prozessor (3) Differenzen von den extrahierten Merkmalen und den Sätzen der abgespeicherten Merkmale bildet und dass, wenn die Differenzen für einen Satz unter einem ersten Schwellwert liegen, der Prozessor (3) die extrahierten Merkmale dem Crashtyp dieses Satzes zuordnet.

8. Verfahren nach Anspruch 5, 6 oder 7, **dadurch gekennzeichnet, dass** der Prozessor (3) das Maß mit einem zweiten Schwellwert vergleicht und dass, wenn das Maß über dem zweiten Schwellwert liegt, der Prozessor (3) ein Auslösesignal an die Aktorik (5) übermittelt.

## Claims

1. Restraining system comprising a restraining device for protecting at least one passenger, the restraining system having an acceleration sensor (1) for sensing an acceleration of the vehicle, an analogue/digital converter (2) for converting an output signal of the acceleration sensor (1) into a digital signal corresponding to the acceleration, a processor (3) for carrying out a wavelet transformation of the digital signal to form a frequency signal, a memory (4) and an actuation system (5) for controlling the restraining device (6), **characterized in that** the processor (3) divides the frequency signal into individual frequency ranges, **in that** the processor (3) determines the respective maximum signal energy and the respective medium signal energy for each frequency range in order to extract features, **in that** the processor (3) determines a crash type with reference to the features, **in that** the processor (3) determines, from the frequency signal, a measure of the braking acceleration energy, and **in that** the processor (3) transmits a control signal to the actuation system (5) as a function of the measure and the crash type.

2. Restraining system according to Claim 1, **characterized in that** the processor (3) compares the extracted features with features which are stored and trained in the memory (4) in order to determine the crash type, the trained features being divided into sets and crash types being respectively assigned to the sets.

3. Restraining system according to Claim 2, **characterized in that** the processor (3) forms differences between the extracted features and the sets of stored features, and **in that**, if the differences of a set lie below a first threshold value, the processor (3) assigns the extracted features to the crash type of this set.

4. Restraining system according to Claim 3, **characterized in that** the processor (3) compares the measure with a second, chronologically variable threshold value, and **in that**, if the measure lies above the second threshold value, the processor (3) transmits a control signal to the actuation system (5) as a function of the determined crash type.

5. Method for controlling a restraining system (6), the acceleration of a vehicle being sensed as an acceleration signal, the acceleration signal being digitized to form a digital signal, the digital signal being transformed to form a frequency signal with a wavelet transformation and the restraining system (6) being controlled by means of an actuation system (5), **characterized in that** the frequency signal is divided into frequency ranges, **in that** the respective maximum signal energy and the respective medium signal energy are determined for each frequency range in order to extract features, **in that** the crash type is determined by reference to the features, **in that** a measure of the braking acceleration energy is determined from the frequency signal, and **in that** a control signal is transmitted to the actuation system (5) as a function of the measure and the crash type.

6. Method according to Claim 5, **characterized in that** the processor (3) compares the extracted features with the stored features in order to determine the crash type, the stored features being divided into sets and crash types being respectively assigned to the sets.

7. Method according to Claim 6, **characterized in that** the processor (3) forms differences between the extracted features and the sets of stored features, and **in that**, if the differences for a set lie below a first threshold value, the processor (3) assigns the extracted features to the crash type of this set.

8. Method according to Claim 5, 6 or 7, **characterized in that** the processor (3) compares the measure with a second threshold value, and **in that**, if the measure lies above the second threshold value, the processor (3) transmits a triggering signal to the actuation system (5).

## Revendications

1. Système de retenue comportant une installation de retenue pour protéger au moins un passager, comprenant un capteur d'accélération (1) destiné à détecter l'accélération du véhicule, un convertisseur analogique-numérique (2) destiné à convertir un signal de sortie du capteur d'accélération (1) en un signal numérique correspondant à l'accélération, un processeur (3) destiné à réaliser une transformation par ondulatoire du signal numérique en un signal de fréquence, une mémoire (4) et un système d'actionnement (5) destiné à commander l'installation de retenue (6),
**caractérisé en ce que**
le processeur (3) répartit le signal de fréquence en des gammes de fréquence particulières, le processeur (3) établit pour chaque gamme de fréquence respectivement l'énergie maximale de signal et respectivement l'énergie moyenne de signal afin d'extraire des caractéristiques, le processeur (3) détermine un type de choc à l'aide des caractéristiques, le processeur (3) établit à partir du signal de fréquence une grandeur pour l'énergie d'accélération de freinage, le processeur (3) transmet en fonction de la grandeur et du type de choc un signal de commande au système d'actionnement (5).

2. Système de retenue selon la revendication 1,
**caractérisé en ce que**
le processeur (3) compare les caractéristiques extraites avec des caractéristiques apprises et mémorisées dans la mémoire (4) afin de déterminer le type de choc, les caractéristiques apprises étant réparties en ensembles et des types de choc étant associés à chacun des ensembles.

3. Système de retenue selon la revendication 2,
**caractérisé en ce que**
le processeur (3) forme des différences à partir des caractéristiques extraites et des ensembles des caractéristiques mémorisées et, lorsque les différences de l'un des ensembles se situent au-dessous d'une première valeur seuil, le processeur (3) associe les caractéristiques extraites au type de choc de cet ensemble.

4. Système de retenue selon la revendication 3,
**caractérisé en ce que**
le processeur (3) compare la grandeur avec une deuxième valeur seuil qui peut varier dans le temps et, lorsque la grandeur se situe au-dessus de la deuxième valeur seuil, le processeur (3) transmet au système d'actionnement (5) un signal de commande en fonction du type de choc établi.

5. Procédé pour commander un système de retenue (6), selon lequel l'accélération d'un véhicule est détectée en tant que signal d'accélération, le signal d'accélération est numérisé en un signal numérique, le signal numérique est transformé en un signal de fréquence à l'aide d'une transformation ondulatoire, le système de retenue (6) est commandé par un système d'actionnement (5),
**caractérisé en ce que**
le signal de fréquence est réparti dans des gammes de fréquence, pour chaque gamme de fréquence afin d'extraire des caractéristiques sont établies respectivement l'énergie maximale de signal et respectivement l'énergie moyenne de signal, le type de choc est déterminé à l'aide des caractéristiques, une grandeur pour l'énergie d'accélération de freinage est établie à partir du signal de fréquence, un signal de commande est transmis au système d'actionnement (5) en fonction de la grandeur et du type de choc.

6. Procédé selon la revendication 5,
**caractérisé en ce que**
le processeur (3) compare les caractéristiques extraites aux caractéristiques mémorisées afin de déterminer le type de choc, les caractéristiques mémorisées étant réparties en ensembles et des types de choc sont associés à chacun des ensembles.

7. Procédé selon la revendication 6,
**caractérisé en ce que**
le processeur (3) forme des différences à partir des caractéristiques extraites et des ensembles des caractéristiques mémorisées et, lorsque pour un ensemble les différences se situent au-dessous d'une première valeur seuil, le processeur (3) associe les caractéristiques extraites au type de choc de cet ensemble.

8. Procédé selon la revendication 5, 6 ou 7,
**caractérisé en ce que**
le processeur (3) compare la grandeur avec une deuxième valeur seuil et, lorsque la grandeur se situe au-dessus de la deuxième valeur seuil, le processeur (3) transmet un signal de déclenchement au système d'actionnement (5).
